# EUROPÄISCHE PATENTSCHRIFT

(11) **EP 4 048 535 B1**
(45) Veröffentlichungstag und Bekanntmachung des Hinweises auf die Patenterteilung: **20.03.2024**
(21) Anmeldenummer: 20780160.6
(22) Anmeldetag: 23.09.2020
(51) Int. Cl.: B60G 7/00, B60G 17/019, F16F 1/00

(54) **FAHRWERKBAUTEIL MIT EINER MESSEINRICHTUNG**
SUSPENSION COMPONENT WITH A MEASURING DEVICE
ÉLÉMENT DE SUSPENSION AVEC UN DISPOSITIF DE MESURE

(30) Priorität: 24.10.2019 DE 102019216371
(43) Veröffentlichungstag der Anmeldung: 31.08.2022
(73) Patentinhaber: ZF Friedrichshafen AG, 88046 Friedrichshafen (DE)
(72) Erfinder: BERGER, Artur, 49163 Bohmte (DE); HOLTHEIDE, Josef, 49434 Neuenkirchen (DE); STRATMANN, Julian, 49152 Bad Essen (DE)
(74) Vertreter: ZF Friedrichshafen AG
(86) Internationale Anmeldenummer: PCT/EP2020/076558
(87) Internationale Veröffentlichungsnummer: WO 2021/078459

(56) Entgegenhaltungen:
- EP-A1- 0 940 682
- EP-A2- 1 424 226
- DE-A1-102016 215 416
- DE-A1-102018 217 642
- DE-B3-102017 208 410
- JP-A- S6 217 421

## Beschreibung

Die Erfindung betrifft ein Fahrwerkbauteil mit den Merkmalen des Oberbegriffes des Patentanspruchs 1.

Ein derartiges Fahrwerkbauteil ist aus der JP S62 17421 A bekannt. Das Dokument JP S62 17421 A1 offenbart den Oberbegriff des Anspruchs 1.

Aus der DE 10 2017 208 410 B3 ist bekannt die Sensoreinrichtung in einer sacklochartigen Bohrung aufzunehmen. Alternativ kann eine Durchgangsbohrung vorgesehen sein. Im montierten Zustand ist die Durchgangsbohrung jedoch nur außenseitig zur Aufnahme der Sensoreinrichtung offen. Gelenkseitig ist die Durchgangsbohrung mittels einer Lagerschale verschlossen bzw. abgedeckt.

Aus der nachveröffentlichten DE 10 2018 217 642 A1 ist ein Fahrwerkbauteil mit den Merkmalen des Oberbegriffes des Patentanspruchs 1 bekannt, wobei sich zudem die Sensoreinrichtung durch eine Durchgangsöffnung erstreckt.

Aus der DE 10 2017 211 396 A1 ist ein Fahrwerkbauteil mit einer Messeinrichtung bekannt, wobei das Strukturteil an seiner Außenfläche eine taschenartige bzw. nutartige Vertiefung aufweist, in welcher die Sensoreinrichtung geführt und gehalten ist. Die EP 0 940 682 A1 betrifft eine Rollenlagereinheit mit einer Einrichtung zum Bestimmen einer Rotationsgeschwindigkeit. Aus der EP 1 424 226 A2 ist ein Aufhängungsanschlag für ein Kraftfahrzeugrad sowie ein Verfahren zur Messung der vertikalen Kräfte bekannt.

Die DE 10 2016 215 416 A1 zeigt eine Sensorvorrichtung für ein Kugelgelenk, wobei die Sensorvorrichtung in einem Deckel des Kugelgelenks angeordnet ist.

Es besteht das Bedürfnis, den Sensorempfänger der Sensoreinrichtung, welcher zum Messen von Signalen des Signalgebers ausgebildet ist, vor Umwelteinflüssen hinreichend zu schützen. Insbesondere soll die Gefahr einer Beschädigung durch Umwelteinflüsse, wie beispielsweise Feuchtigkeit, Schnee oder Eis, und/oder aufgrund mechanischer Beschädigungen, wie beispielsweise aufgrund von Steinschlag, zu vermeiden. Des Weiteren kann bei bestimmten Ausführungsformen des Fahrwerkbauteils und/oder des Strukturteils die Gefahr bestehen, dass der Signalempfänger einen zu großen Abstand zum Signalgeber aufweist. Somit kann das Risiko bestehen, dass keine geeignete Stelle zum Anordnen der Sensoreinrichtung an einer Außenfläche des Strukturteils gefunden werden kann.

Es ist die der Erfindung zu Grunde liegende Aufgabe, ein Fahrwerkbauteil der eingangs genannten Art derart weiterzuentwickeln, dass eine Anordnung der Sensoreinrichtung an dem Strukturteil verbessert ist. Vorzugsweise soll die Gefahr von Umwelteinflüssen und/oder mechanischen Beschädigungen auf den Signalempfänger der Sensoreinrichtung und/oder ein Abstand zwischen dem Signalempfänger der Sensoreinrichtung und dem Signalgeber des Gelenks reduziert werden. Insbesondere soll eine alternative Ausführungsform bereitgestellt werden.

Die der Erfindung zu Grunde liegende Aufgabe wird mit einem Fahrwerkbauteil nach Anspruch 1 gelöst. Bevorzugte Weiterbildungen der Erfindung finden sich in den Unteransprüchen und in der nachfolgenden Beschreibung.

Die Erfindung betrifft ein Fahrwerkbauteil. Insbesondere ist das Fahrwerkbauteil zum Einsatz in einem Fahrwerk eines Kraftfahrzeugs ausgebildet oder in einem Fahrwerk eines Kraftfahrzeugs angeordnet. Das Fahrwerkbauteil weist eine Messeinrichtung zum Bestimmen einer relativen Lage von zwei beweglich miteinander verbundenen Fahrwerkkomponenten auf. Insbesondere ist die Messeinrichtung als eine Winkelmesseinrichtung ausgebildet. Eine erste Fahrwerkkomponente ist als ein Gelenk mit mindestens einer Drehachse oder mit mehreren Drehachsen realisiert. Eine weitere Fahrwerkkomponente ist als ein Strukturteil ausgebildet. Hierbei kann das Strukturteil eine Kontur oder Grundform des Fahrwerkbauteils vorgeben bzw. definieren. Insbesondere weist das Strukturteil eine Gelenkaufnahme zum Anordnen des Gelenks auf. Das Strukturteil und das Gelenk sind relativ zueinander gelenkbeweglich gelagert. Vorzugsweise ist das Strukturteil mittels des Gelenks um die mindestens eine Drehachse des Gelenks drehbar. Die Messeinrichtung weist einen Signalgeber und eine Sensoreinrichtung mit einem Signalempfänger auf. Hierbei ist die Sensoreinrichtung am Strukturteil und der Signalgeber am Gelenk angeordnet. Somit kann mittels der Messeinrichtung eine relative Verdrehung des Strukturteils zum Gelenk und um die mindestens eine Drehachse oder um mehrere Drehachsen des Gelenks erfasst werden. Insbesondere wirken der Signalempfänger der Sensoreinrichtung und der Signalgeber zum Bestimmen der relativen Lage der zwei beweglich miteinander verbundenen Fahrwerkkomponenten zusammen. Hierbei erstreckt sich die Sensoreinrichtung durch eine Durchgangsöffnung des Fahrwerkbauteils hindurch.

Hierbei ist von Vorteil, dass aufgrund der Anordnung der Sensoreinrichtung in der Durchgangsöffnung der Signalempfänger besser vor Umwelteinflüssen und/oder mechanischen Beschädigungen geschützt werden kann. Des Weiteren ermöglicht die Anordnung der Sensoreinrichtung in einer Durchgangsöffnung ein Anordnen des Signalempfängers mit möglichst geringem Abstand zum Signalgeber. Hierdurch kann eine genauere oder nähere Positionierung des Signalempfängers zum Signalgeber als bei bisherigen Lösungen realisiert werden. Insbesondere wird aufgrund der Durchgangsöffnung die Festigkeit des Fahrwerkbauteils und/oder des Strukturteils nicht negativ beeinflusst, vorzugsweise wird die Festigkeit des Fahrwerkbauteils und/oder des Strukturteils erhalten oder sogar erhöht. Dies gilt insbesondere im Vergleich zur Einbringung einer nutartigen Vertiefung zur Aufnahme der Sensoreinrichtung, wie dies aus dem Stand der Technik bekannt ist.

Insbesondere bezeichnet eine gelenkbewegliche Lagerung der beiden Fahrwerkkomponenten eine Verbindung der beiden Fahrwerkkomponenten mittels des Gelenks derart, dass die beiden Fahrwerkkomponenten um mindestens eine Drehachse relativ zueinander verdreht werden können. Es sind also gelenkbewegliche Verbindungen um genau eine Drehachse, um genau zwei Drehachsen oder um genau drei Drehachsen oder um mehrere Drehachsen möglich. Insbesondere lässt eine gelenkbewegliche Verbindung keine translatorische Bewegung der beiden Fahrwerkkomponenten relativ zueinander zu. Vorzugsweise ist unter einer gelenkbeweglichen Lagerung der beiden Fahrwerkkomponenten eine derartige Verbindung zu verstehen, bei der die beiden Fahrwerkkomponenten um mindestens eine Drehachse relativ zueinander verdreht und/oder zueinander verkippt werden können.

Vorzugsweise ist unter einer Durchgangsöffnung im Sinne der vorliegenden Erfindung eine das Fahrwerkbauteil, insbesondere das Strukturteil und/oder ein Gelenkgehäuse des Gelenks, durchdringende Ausnehmung zu verstehen. Die Durchgangsöffnung kann vollständig umlaufend, vorzugsweise radial umlaufend zu einer axialen Erstreckung der Durchgangsöffnung, von dem Fahrwerkbauteil, insbesondere dem Strukturteil und/oder einem Gelenkgehäuse des Gelenks, umschlossen sein.

Das Gelenk kann ein Gelenkgehäuse, eine Lagerschale und/oder ein Gelenkinnenteil aufweisen. Insbesondere ist das Gelenkinnenteil gelenkbeweglich in Bezug zum Gelenkgehäuse, der Lagerschale und/oder dem Strukturteil gelagert. Vorzugsweise weist das Gelenkinnenteil eine Gelenkkugel und/oder einen kugelförmigen Abschnitt und/oder kugelabschnittsförmigen Abschnitt auf. Insbesondere ist die Lagerschale zwischen dem Gelenkgehäuse und dem Gelenkinnenteil angeordnet. Hierbei kann mittels der, insbesondere aus Kunststoff ausgebildeten, Lagerschale, die Reibung und somit der Verschleiß des Gelenks trotz zuweilen hoher betrieblicher Belastungen reduziert werden. Insbesondere ist der Signalgeber am Gelenkinnenteil, vorzugsweise in der Gelenkkugel, im kugelförmigen Abschnitt und/oder kugelabschnittsförmigen Abschnitt des Gelenkinnenteils, angeordnet. Aufgrund dieser Anordnung kann der Signalgeber vor Umwelteinflüssen und/oder mechanischen Belastungen geschützt sein. Des Weiteren kann der Signalgeber als ein Permanentmagnet ausgebildet sein. Ein Permanentmagnet erzeugt, ohne dass Energie von außen zugeführt werden muss, ein Magnetfeld, welches mit der Sensoreinrichtung, insbesondere dem Signalempfänger der Sensoreinrichtung, in Wirkverbindung steht.

Nach einer weiteren Ausführungsform erstreckt sich die Durchgangsöffnung von einer ersten Öffnung im Strukturteil bis zu einer zweiten Öffnung im Strukturteil. Insbesondere sind die erste Öffnung und die zweite Öffnung voneinander abgewandt. Vorzugsweise ist die Durchgangsöffnung in einem eine Gelenkaufnahme bildenden Abschnitt des Strukturteils angeordnet. Insbesondere ist die Durchgangsöffnung ausschließlich in dem Strukturteil selbst angeordnet. Bei dieser Ausführungsform kann die Durchgangsöffnung vollständig umlaufend, vorzugsweise radial umlaufend zu einer axialen Erstreckung der Durchgangsöffnung, von dem Strukturteil umschlossen sein. Die Durchgangsöffnung kann mittels einer Fräsung oder mittels einer Bohrung in dem Fahrwerkbauteil hergestellt sein oder werden.

Insbesondere ist das Gelenk in das Strukturteil integriert. Das Strukturteil selbst, vorzugsweise ein Abschnitt des Strukturteils, kann zugleich ein Gelenkgehäuse für das Gelenk bilden. Eine Lagerschale und/oder ein Gelenkinnenteil können in einer Gelenkausnehmung des Strukturteils angeordnet sein.

Gemäß einer Weiterbildung weist die Durchgangsöffnung einen ersten Durchgangsabschnitt im Strukturteil und einem weiteren Durchgangsabschnitt im Gelenk auf. Insbesondere ist die Durchgangsöffnung mittels des ersten Durchgangsabschnittes und des weiteren Durchgangsabschnittes gebildet. Vorzugsweise ist der weitere Durchgangsabschnitt innerhalb des ersten Durchgangsabschnittes zum Ausbilden der Durchgangsöffnung angeordnet. Hierbei kann der weitere Durchgangsabschnitt mittig im oder innerhalb des ersten Durchgangsabschnittes angeordnet sein. Vorzugsweise ist der weitere Durchgangsabschnitt in einem Gelenkgehäuse des Gelenks angeordnet. Der weitere Durchgangsabschnitt im Gelenkgehäuse des Gelenks kann als eine nutartige Vertiefung an einer Außenseite und/oder an einem Außenumfang des Gelenkgehäuses ausgebildet sein. Der erste Durchgangsabschnitt des Strukturteils kann eine Gelenkaufnahme zum Aufnehmen des Gelenkgehäuses schneiden. Hierbei kann der erste Durchgangsabschnitt im Bereich der Gelenkaufnahme nutartig ausgebildet sein. Insbesondere sind der erste Durchgangsabschnitt und der weitere Durchgangsabschnitt formkorrespondierend zueinander ausgebildet, um gemeinsam die Durchgangsöffnung zu bilden.

Erfindungsgemäß erstreckt sich die Durchgangsöffnung quer oder rechtwinklig zur Drehachse des Gelenks. Insbesondere erstreckt sich die Durchgangsöffnung quer oder rechtwinklig zu einer Längsachse des Gelenks. Die Durchgangsöffnung erstreckt sich parallel zu einer Längsachse des Strukturteils. Beispielsweise bei einem strebenartigen Zweipunktlenker kann sich die Durchgangsöffnung parallel zur Längsachse des Strukturteils bzw. Fahrwerkbauteils erstrecken.

Erfindungsgemäß ist der Signalempfänger der Sensoreinrichtung innerhalb der Durchgangsöffnung angeordnet. Insbesondere ist der Signalempfänger der Sensoreinrichtung innerhalb des weiteren Durchgangsabschnittes des Gelenks angeordnet. Aufgrund dieser Anordnung kann der Signalempfänger vor Umwelteinflüssen und/oder mechanischen Belastungen geschützt sein. Vorzugsweise ist der Signalempfänger zum Messen von Signalen des Signalgebers angeordnet. Der Signalempfänger kann als ein magnetempfindlicher Signalempfänger, vorzugsweise als ein Hall-Sensor, ausgebildet sein. Ein Hall-Sensor reagiert auf eine Veränderung des Magnetfeldes mit einem Signal. Eine Änderung eines Magnetfeldes kann aufgrund einer Relativbewegung zwischen dem Signalgeber bzw. dem Magneten und dem Signalempfänger bzw. dem Hall-Sensor bewirkt werden. Mittels der Sensoreinrichtung und/oder der Anordnung des Signalempfängers innerhalb der Durchgangsöffnung kann der Signalempfänger in Bezug zu dem Signalgeber in einem magnetempfindlichen Bereich oder einem "Magnet-Sicht-Bereich" angeordnet werden.

Erfindungsgemäß weist die Sensoreinrichtung einen ersten Endabschnitt und einen vom ersten Endabschnitt abgewandten zweiten Endabschnitt auf. Hierbei sind der erste Endabschnitt und der zweite Endabschnitt der Sensoreinrichtung außerhalb der Durchgangsöffnung angeordnet. Insbesondere ist ein Abschnitt der Sensoreinrichtung mit dem Signalempfänger innerhalb der Durchgangsöffnung angeordnet.

Erfindungsgemäß weist die Sensoreinrichtung eine Befestigungseinrichtung zum Festsetzen der Sensoreinrichtung am Strukturteil auf. Hierbei weist der erste Endabschnitt der Sensoreinrichtung die Befestigungseinrichtung, vorzugsweise zum formschlüssigen Festsetzen der Sensoreinrichtung am Strukturteil, auf. Die Sensoreinrichtung kann an ihrer Außenseite Rippen aufweisen. Mittels der Rippen kann eine Passgenauigkeit der Sensoreinrichtung in der Durchgangsöffnung und/oder ein Festsetzen der Sensoreinrichtung in der Durchgangsöffnung realisiert werden.

Der erste Endabschnitt weist die Befestigungseinrichtung zum Festsetzen der Sensoreinrichtung am Strukturteil auf. Erfindungsgemäß weist der erste Endabschnitt zum Ausbilden der Befestigungseinrichtung ein Durchgangsloch auf. Das Durchgangsloch ist zum Durchstecken eines Befestigungsmittels, beispielsweise einer Schraube, ausgebildet. Zum Ausbilden der Befestigungseinrichtung kann das Strukturteil im Bereich des ersten Endabschnittes eine Befestigungsaufnahme aufweisen. Insbesondere wirkt das Befestigungsmittel mit der Befestigungsaufnahme zum Festsetzen der Sensoreinrichtung am Strukturteil und in der Durchgangsöffnung zusammen. Beispielsweise ist eine Schraube als Befestigungsmittel durch das Durchgangsloch in eine sacklochartige Befestigungsaufnahme eingeschraubt. Insbesondere ist der erste Endabschnitt im Bereich der ersten Öffnung der Durchgangsöffnung angeordnet. Der zweite Endabschnitt kann im Bereich der zweiten Öffnung der Durchgangsöffnung angeordnet sein. Erfindungsgemäß hat der zweite Endabschnitt eine Anschlusseinrichtung zum Verbinden der Sensoreinrichtung mit einer Auswerteeinrichtung. Die Anschlusseinrichtung kann als ein Stecker oder eine Steckeraufnahme ausgebildet sein.

Alternativ weist die Befestigungseinrichtung entsprechend eines nicht erfindungsgemäßen Beispiels mindestens ein Formschlusselement, insbesondere zwei Formschlusselemente, auf. Insbesondere ist mittels der Formschlusselemente eine translatorische Relativbewegung der Sensoreinrichtung zum Strukturteil in axialer Richtung der Durchgangsöffnung verhindert und/oder blockiert. Das mindestens eine Formschlusselementist an einer Außenseite der Sensoreinrichtung angeordnet. Hierbei ist das mindestens eine Formschlusselement als rampenartige Erhebungen ausgebildet. Die Formschlusselemente können auf einer vom Gelenk abgewandten Seite der Sensoreinrichtung angeordnet sein. Bei einer Ausbildung der Formschlusselemente als rampenartige Erhebungen können diese spiegelsymmetrisch zueinander angeordnet sein. Insbesondere sind Stirnseiten der beiden rampenartigen Erhebungen einander zugewandt. Die Formschlusselemente wirken im Bereich der Öffnungen der Durchgangsöffnung mit dem Strukturteil zum Festsetzen der Sensoreinrichtung zusammen. Insbesondere schlägt ein erstes Formschlusselement mit einer ersten Stirnseite an einen Rand der ersten Öffnung der Durchgangsöffnung und ein zweites Formschlusselement mit einer zweiten Stirnseite an einen Rand der zweiten Öffnung der Durchgangsöffnung an. Vorzugsweise weist die Sensoreinrichtung zwei Dichtelemente auf. Insbesondere sind die Dichtelemente als O-Ringe ausgebildet. Die Dichtelemente können mindestens teilweise in umlaufende Dichtnuten im Außenumfang der Sensoreinrichtung angeordnet und/oder eingelassen sein. Vorzugsweise sind die Dichtelemente im Bereich der Öffnungen der Durchgangsöffnung und innerhalb der Durchgangsöffnung angeordnet. Ein erstes Dichtelement kann im Bereich der ersten Öffnung der Durchgangsöffnung und ein zweites Dichtelement im Bereich der zweiten Öffnung der Durchgangsöffnung angeordnet sein. Insbesondere ist der Signalempfänger zwischen den beiden Dichtelementen angeordnet.

Gemäß einer Weiterbildung ist zwischen der Sensoreinrichtung und der Durchgangsöffnung eine formschlüssige und/oder drehfeste Verbindung ausgebildet. Aufgrund der formschlüssigen und/oder drehfesten Verbindung ist eine Relativbewegung der Sensoreinrichtung zum Strukturteil, insbesondere eine Drehbewegung um eine Längsachse der Sensoreinrichtung, verhindert. Insbesondere weist die Sensoreinrichtung einen unrunden Außenumfang und/oder die Durchgangsöffnung einen unrunden Innenumfang auf. Vorzugsweise sind der unrunde Außenumfang der Sensoreinrichtung und der unrunde Innenumfang der Durchgangsöffnung korrespondierend zueinander ausgebildet, wodurch auf einfache Weise eine formschlüssige und zugleich drehfeste Verbindung realisierbar ist. Die Sensoreinrichtung kann stabartig und/oder strebenartig ausgebildet sein. Der Innenumfang der Durchgangsöffnung kann korrespondierend zum Außenumfang der stabartigen und/oder strebenartigen Sensoreinrichtung ausgebildet sein. Insbesondere ist ein Außenumfang der Sensoreinrichtung im Bereich des Signalempfängers vollständig vom Material des Fahrwerkbauteils, insbesondere vom Material des Strukturteils und/oder des Gelenkgehäuses des Gelenks, umgeben. Insbesondere liegt Material des Fahrwerkbauteils, insbesondere des Strukturteils und/oder des Gelenkgehäuses, im Bereich des Signalempfängers am Außenumfang der Sensoreinrichtung an. Das Fahrwerkbauteil, das Strukturteil und/oder das Gelenkgehäuse kann aus Aluminium gebildet sein.

Vorzugsweise ist aufgrund der formschlüssigen Verbindung zwischen der Sensoreinrichtung und der Durchgangsöffnung eine translatorische Relativbewegung der Sensoreinrichtung zum Strukturteil in axialer Richtung der Durchgangsöffnung verhindert und/oder blockiert.

Das Gelenk ist erfindungsgemäß als ein Kugelhülsengelenk oder als ein Kugelzapfengelenk ausgebildet. Des Weiteren ist das Strukturteil erfindungsgemäß als ein Lenker, Radträger, Flanschgelenk oder eine Spurstange ausgebildet. Beispielsweise kann das Strukturteil als ein Zweitpunktlenker, Dreipunktlenker oder Mehrpunktlenker ausgebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: einen Ausschnitt einer perspektivischen Seitenansicht eines erfindungsgemäßen Fahrwerkbauteils,
- Fig. 2: einen Ausschnitt einer teilweise geschnittenen Seitenansicht des erfindungsgemäßen Fahrwerkbauteils gemäß Fig. 1 ohne Sensoreinrichtung,
- Fig. 3: einen Ausschnitt einer geschnittenen Seitenansicht des erfindungsgemäßen Fahrwerkbauteils gemäß Fig. 1,
- Fig. 4: einen Ausschnitt einer geschnittenen Frontansicht des erfindungsgemäßen Fahrwerkbauteils gemäß Fig. 1,
- Fig. 5: eine perspektivische Seitenansicht einer weiteren Sensoreinrichtung zum Ausbilden eines nicht erfindungsgemäßen Fahrwerkbauteils, und
- Fig. 6: einen weiteren Ausschnitt einer geschnittenen Seitenansicht eines nicht erfindungsgemäßen Fahrwerkbauteils mit einer weiteren Sensoreinrichtung gemäß Fig. 5.

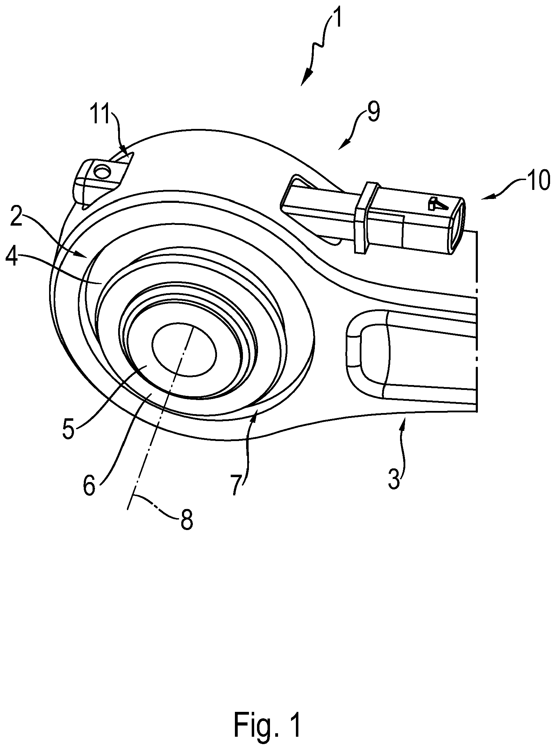

Figur 1 zeigt einen Ausschnitt einer perspektivischen Seitenansicht eines erfindungsgemäßen Fahrwerkbauteils 1. Das Fahrwerkbauteil 1 weist eine erste Fahrwerkkomponente 2 und eine weitere Fahrwerkkomponente 3 auf. Die erste Fahrwerkkomponente 2 ist bei diesem Ausführungsbeispiel als ein Gelenk 2 und die weitere Fahrwerkkomponente 3 als ein Strukturteil 3 ausgebildet. Hier realisiert das Fahrwerkbauteil 1 beispielhaft einen Lenker, nämlich einen Zweipunktlenker, für ein Fahrwerk eines hier nicht näher dargestellten Kraftfahrzeugs.

Das Gelenk 2 ist bei diesem Ausführungsbeispiel als ein Kugelhülsengelenk ausgebildet. Das Gelenk 2 weist ein Gelenkgehäuse 4 und ein Gelenkinnenteil 5 auf. Das Gelenkinnenteil 5 ist hier als eine Kugelhülse realisiert. Des Weiteren weist das Gelenk 2 einen Dichtungsbalg 6 auf. Dem Dichtungsbalg 6 kommt hierbei die Funktion zu, den Gelenkbereich des Gelenks 2 zwischen dem Gelenkgehäuse 4 und dem Gelenkinnenteil 5 gegenüber äußeren Umwelteinflüssen, wie beispielsweise Verunreinigungen, Feuchtigkeit, mechanischen Einflüssen und dergleichen, zu schützen. Hierzu ist der Dichtungsbalg 6 aus einem flexiblen und elastischen Material gebildet. Auf der hier nicht erkennbaren von dem Dichtungsbalg 6 abgewandten Seite weist das Gelenk 2 einen weiteren Dichtungsbalg 6 auf.

Das Gelenk 2 bzw. das Gelenkgehäuse 4 ist in einer Gelenkaufnahme 7 des Strukturteils 3 angeordnet bzw. eingepresst. Hierdurch ist das Gelenkgehäuse 4 in Bezug zum Strukturteil 3 festgesetzt. Das Gelenkinnenteil 5 ist gelenkbeweglich in dem Gelenkgehäuse 4 und somit auch in Bezug zum Strukturteil 3 gelagert. Das Gelenk 2 weist mindestens eine Drehachse 8 auf, wobei das Strukturteil 3 um die Drehachse 8 des Gelenks 2 gelenkbeweglich gelagert ist.

Des Weiteren weist das Fahrwerkbauteil 1 eine Messeinrichtung 9 auf. Die Messeinrichtung 9 ist zum Bestimmen einer relativen Lage der beiden beweglich miteinander verbundenen Fahrwerkkomponenten 2, 3 ausgebildet. Die Messeinrichtung 9 weist eine Sensoreinrichtung 10 auf. Die Sensoreinrichtung 10 erstreckt sich durch eine Durchgangsöffnung 11 des Fahrwerkbauteils 1 hindurch.

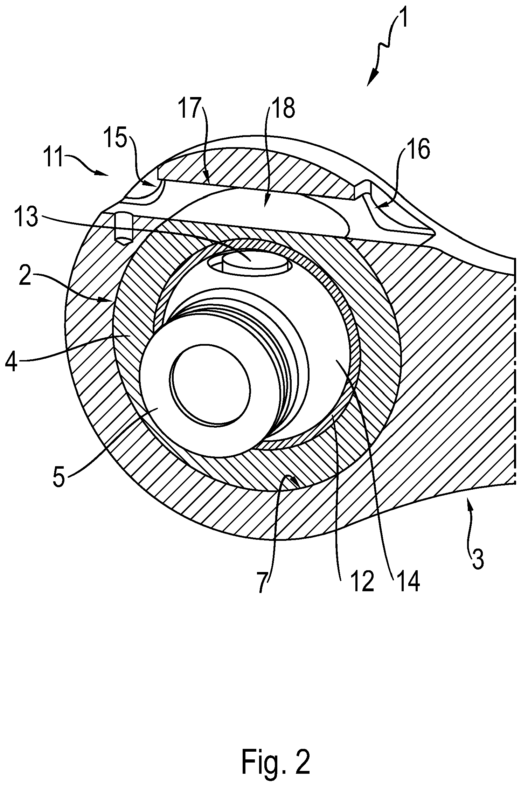

Figur 2 zeigt einen Ausschnitt einer teilweise geschnittenen Seitenansicht des erfindungsgemäßen Fahrwerkbauteils 1 gemäß Figur 1 ohne Sensoreinrichtung 10. Das Gelenk 2 weist eine Lagerschale 12 auf, in der das Gelenkinnenteil 5 gelenkbeweglich gelagert ist. Die Lagerschale 12 ist aus einem Kunststoff gebildet. Das Strukturteil 3, das Gelenkgehäuse 4 und das Gelenkinnenteil 5 sind bei diesem Ausführungsbeispiel aus Aluminium gebildet.

Die Messeinrichtung 9 gemäß Figur 1 umfasst auch einen Signalgeber 13. Der Signalgeber 13 ist am Gelenk 2 angeordnet bzw. dem Gelenk 2 zugeordnet. Gemäß diesem Ausführungsbeispiel ist der Signalgeber 13 an dem Gelenkinnenteil 5 befestigt. Hierbei ist der Signalgeber 13 in einer Gelenkkugel 14 des Gelenkinnenteils 5 angeordnet. Der Signalgeber 13 ist bei diesem Ausführungsbeispiel als ein Magnet ausgebildet.

Die Durchgangsöffnung 11 erstreckt sich von einer ersten Öffnung 15 im Strukturteil 3 bis zu einer zweiten Öffnung 16 im Strukturteil 3. Hierbei sind die erste Öffnung 15 und die zweite Öffnung 16 voneinander abgewandt.

Bei diesem Ausführungsbeispiel weist die Durchgangsöffnung 11 einen ersten Durchgangsabschnitt 17 im Strukturteil 3 auf. Des Weiteren weist die Durchgangsöffnung 11 einen weiteren Durchgangsabschnitt 18 im Gelenk 2 auf. Hierbei ist der weitere Durchgangsabschnitt 18 innerhalb des ersten Durchgangsabschnitts 17 zum Ausbilden der Durchgangsöffnung 11 angeordnet. Hier ist der weitere Durchgangsabschnitt 18 mittig im ersten Durchgangsabschnitt 17 angeordnet. Der weitere Durchgangsabschnitt 18 ist im Gelenkgehäuse 4 des Gelenks 2 angeordnet bzw. ausgebildet. Hierbei ist der weitere Durchgangsabschnitt 18 als eine nutartige Vertiefung oder als ein nutartiger Kanal in den Außenumfang des Gelenkgehäuses 4 eingebracht. Ein mittlerer Abschnitt des ersten Durchgangsabschnitts 17 ist formkorrespondierend zu dem weiteren Durchgangsabschnitt 18 ausgebildet. Somit ist auch der mittlere Abschnitt des ersten Durchgangsabschnitts 17 als eine nutartige Vertiefung bzw. als ein nutartiger Kanal realisiert. Der erste Durchgangsabschnitt 17 und der weitere Durchgangsabschnitt 18 greifen formschlüssig ineinander ein und bilden hierdurch die Durchgangsöffnung 11.

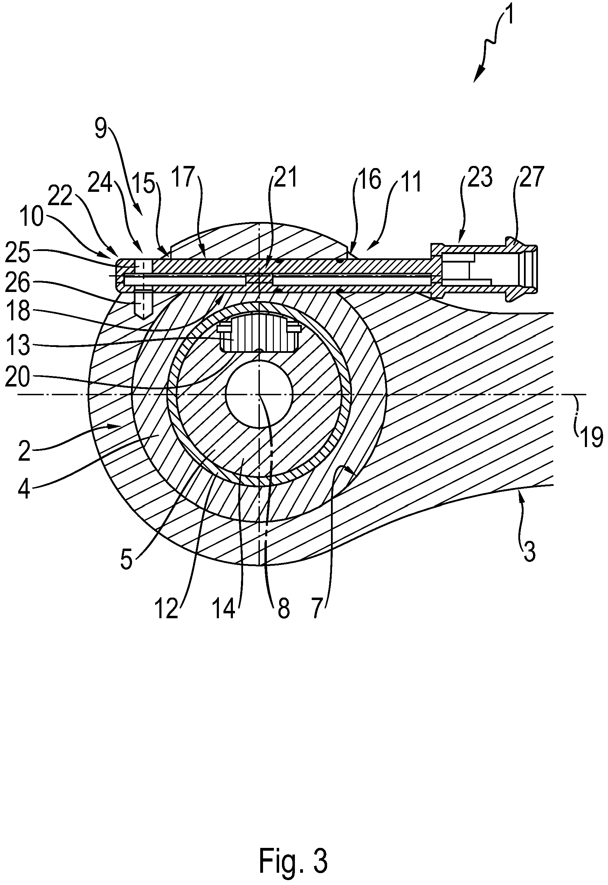

Figur 3 zeigt einen Ausschnitt einer geschnittenen Seitenansicht des erfindungsgemäßen Fahrwerkbauteils 1 gemäß Figur 1. Die Durchgangsöffnung 11 erstreckt sich bei diesem Ausführungsbeispiel rechtwinklig zur Drehachse 8 des Gelenks 2. Des Weiteren erstreckt sich bei diesem Ausführungsbeispiel die Durchgangsöffnung 11 parallel zu einer Längsachse 19 des Strukturteils 3. Der Signalgeber 13 ist in einer Vertiefung 20 der Gelenkkugel 14 angeordnet.

Die Sensoreinrichtung 10 weist einen Signalempfänger 21 auf. Bei diesem Ausführungsbeispiel ist der Signalempfänger 21 als ein Hall-Sensor-Element ausgebildet. Der Signalempfänger 21 ist innerhalb der Durchgangsöffnung 11 angeordnet. Des Weiteren ist bei diesem Ausführungsbeispiel der Signalempfänger 21 innerhalb des weiteren Durchgangsabschnittes 18 des Gelenks 2 bzw. des Gelenkgehäuses 4 angeordnet. Somit ist die Sensoreinrichtung 10 im Bereich des Signalempfängers 21 vom Material des Gelenks 2 bzw. des Gelenkgehäuses 4 und des Strukturteils 3 umgeben, wodurch der Signalempfänger gegenüber äußeren Umwelteinflüssen und/oder mechanischen Belastungen geschützt ist.

Die Sensoreinrichtung 10 ist bei diesem Ausführungsbeispiel stabartig bzw. strebenartig ausgebildet. Des Weiteren weist die Sensoreinrichtung 10 einen ersten Endabschnitt 22 und einen vom ersten Endabschnitt 22 abgewandten zweiten Endabschnitt 23 auf. Die beiden Endabschnitte 22, 23 sind außerhalb der Durchgangsöffnung 11 angeordnet. Bei diesem Ausführungsbeispiel ist der erste Endabschnitt 22 derart ausgebildet, dass der erste Endabschnitt 22 zum Anordnen der Sensoreinrichtung 10 in der Durchgangsöffnung 11 durch die Durchgangsöffnung 11 hindurchgeführt werden kann.

Des Weiteren weist der erste Endabschnitt 22 bei diesem Ausführungsbeispiel eine Befestigungseinrichtung 24 zum Festsetzen der Sensoreinrichtung 10 am Strukturteil 3 auf. Bei diesem Ausführungsbeispiel weist die Befestigungseinrichtung 24 ein Durchgangsloch 5 im ersten Endabschnitt 22 auf. Durch das Durchgangsloch kann ein hier nicht näher dargestelltes Befestigungsmittel, beispielsweise eine Schraube, in einer Befestigungsaufnahme 26 festgesetzt werden. Hierbei ist die Befestigungsaufnahme 26 Bestandteil der Befestigungseinrichtung 24 und an dem Strukturteil 3 angeordnet. Bei diesem Ausführungsbeispiel ist die Befestigungsaufnahme 26 als ein Sackloch zum Einschrauben einer Schraube ausgebildet.

Der zweite Endabschnitt 23 hat bei diesem Ausführungsbeispiel eine Anschlusseinrichtung 27. Die Anschlusseinrichtung 27 ist zum Verbinden der Sensoreinrichtung 10 mit einer hier nicht näher dargestellten Auswerteeinrichtung ausgebildet. Hier ist die Anschlusseinrichtung 27 beispielhaft als eine Steckeraufnahme realisiert.

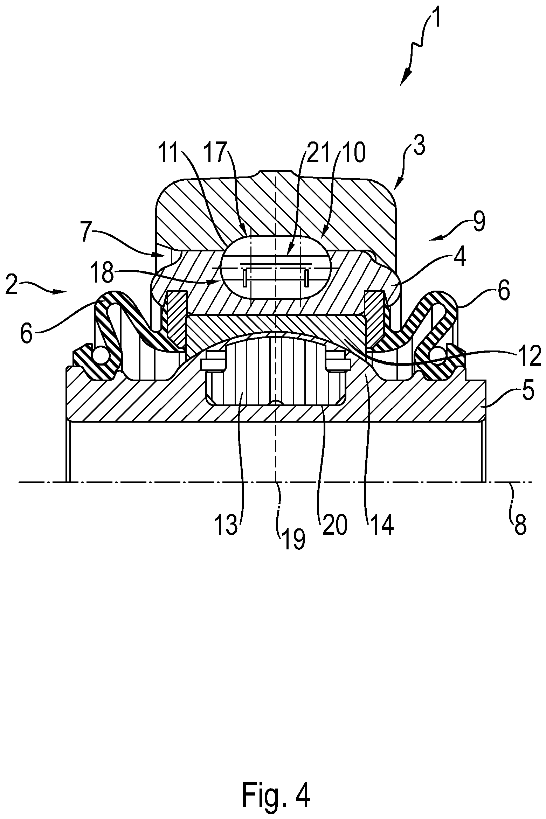

Figur 4 zeigt einen Ausschnitt einer geschnittenen Frontansicht des erfindungsgemä-ßen Fahrwerkbauteils 1 gemäß Figur 1. Zum Verhindern einer Verdrehung der Sensoreinrichtung 10 um ihre Längsachse ist zwischen der Sensoreinrichtung 10 und der Durchgangsöffnung 11 eine formschlüssige bzw. drehfeste Verbindung ausgebildet. Hierzu weist die Sensoreinrichtung 10 einen unrunden Außenumfang und die Durchgangsöffnung 11 einen korrespondierend ausgebildeten unrunden Innenumfang auf. Insoweit wirken die Sensoreinrichtung 10 und die Durchgangsöffnung 11 zum Ausbilden eines Formschlusses miteinander zusammen. Bei diesem Ausführungsbeispiel ergibt sich ein langlochartiger Querschnitt der Sensoreinrichtung 10 bzw. der Durchgangsöffnung 11.

Zum Ausbilden bzw. Herstellen des Fahrwerkbauteils 1 gemäß den Figuren 1 bis 4 wird die Durchgangsöffnung 11 in dem Fahrwerkbauteil 1 hergestellt und die Sensoreinrichtung 10 in die Durchgangsöffnung 11 hineingesteckt. Hierbei werden der erste Endabschnitt 22 und der zweite Endabschnitt 23 der Sensoreinrichtung 10 außerhalb der Durchgangsöffnung 11 angeordnet.

Gemäß einer ersten Ausführung wird hierbei zunächst das Gelenk 2 in die Gelenkaufnahme 7 des Strukturteils 3 angeordnet oder eingepresst. Nachfolgend wird die Durchgangsöffnung 11 hergestellt. Dies kann beispielsweise mittels einer Fräsung oder Bohrung realisiert werden. Anschließend wird die Sensoreinrichtung 10 in der Durchgangsöffnung 11 angeordnet.

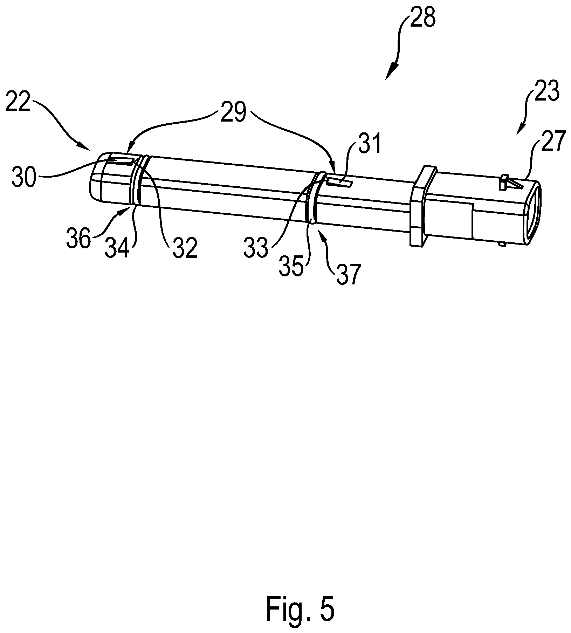

Gemäß einer alternativen Ausführungsform wird zunächst der erste Durchgangsabschnitt 17 im Strukturteil 2 hergestellt. Hiervon unabhängig wird der weitere Durchgangsabschnitt 18 im Gelenk 2 bzw. im Gelenkgehäuse 4 hergestellt. Die Herstellung des ersten Durchgangsabschnittes und des weiteren Durchgangsabschnittes kann ebenfalls mittels Fräsen oder Bohren realisiert werden. Erst hieran anschließend bzw. nachfolgend wird das Gelenk 2 in der Gelenkaufnahme 7 des Strukturteils 3 angeordnet. Hierbei wird der weitere Durchgangsabschnitt 18 des Gelenks 2 innerhalb des ersten Durchgangsabschnitts 17 zum Ausbilden der Durchgangsöffnung 11 angeordnet. Bei diesem Ausführungsbeispiel wird der weitere Durchgangsabschnitt 18 in einem mittleren Abschnitt des ersten Durchgangsabschnitts 17 positioniert. Anschließend wird die Sensoreinrichtung 10 in der Durchgangsöffnung 11 angeordnet. Fig. 5 zeigt eine perspektivische Seitenansicht einer weiteren Sensoreinrichtung 28 zum Ausbilden eines nicht erfindungsgemäßen Fahrwerksbauteils. Der Aufbau der weiteren Sensoreinrichtung 28 entspricht weitgehend der Sensoreinrichtung 10 gemäß den vorangegangenen Figuren. Insoweit wird auch auf die vorstehende Beschreibung verwiesen.

Im Unterschied zur Sensoreinrichtung 10 weist die weitere Sensoreinrichtung 28 keine Merkmale zum Ausbilden der Befestigungseinrichtung 24 auf. Stattdessen weist die weitere Sensoreinrichtung 28 eine weitere Befestigungseinrichtung 29 auf.

Die Befestigungseinrichtung 29 weist bei diesem nicht erfindungsgemäßen Beispiel zwei Formschlusselemente 30, 31 auf. Die Formschlusselemente 30, 31 sind an einer Außenseite der Sensoreinrichtung 28 angeordnet. Hier sind die Formschlusselemente 30, 31 als rampenartige Erhebungen ausgebildet. Die als rampenartige Erhebungen ausgebildeten Formschlusselemente 30, 31 sind spiegelsymmetrisch zueinander angeordnet. Hierbei sind Stirnseiten 32, 33 der beiden rampenartigen Erhebungen bzw. Formschlusselemente 30, 31 einander zugewandt.

Die Sensoreinrichtung 28 weist zudem zwei Dichtelemente 34, 35 auf. Bei diesem Ausführungsbeispiel sind die Dichtelemente 34, 35 als O-Ringe ausgebildet. Die Dichtelemente 34, 35 sind mindestens teilweise in umlaufende Dichtnuten 36, 37 im Außenumfang der Sensoreinrichtung 28 angeordnet und/oder eingelassen sein.

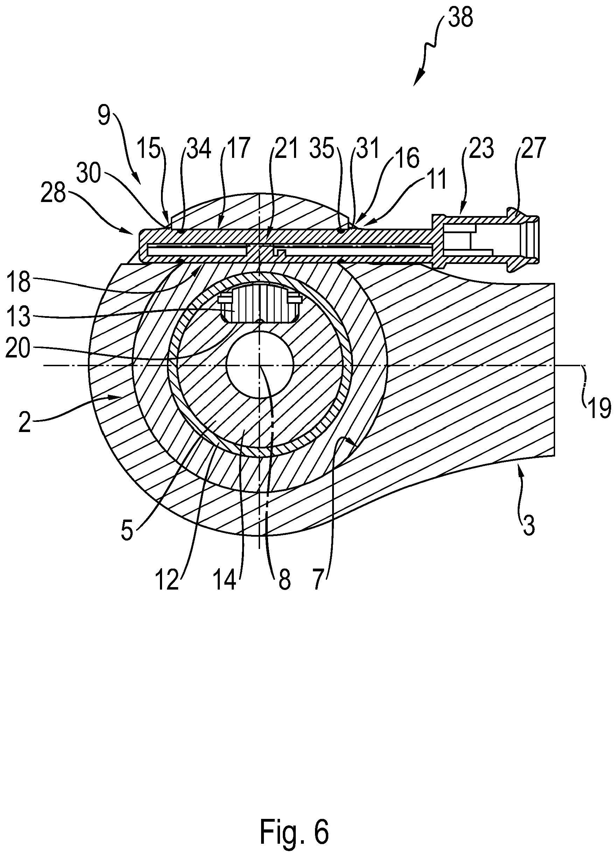

Fig. 6 zeigt einen weiteren Ausschnitt einer geschnittenen Seitenansicht eines nicht erfindungsgemäßen Fahrwerkbauteils 38 mit der weiteren Sensoreinrichtung 28 gemäß Fig. 5. Der Aufbau des Fahrwerkbauteils 38 entspricht weitgehend der Fahrwerkeinrichtung 1 gemäß den vorangegangenen Figuren 1 bis 4. Insoweit wird auch auf die vorstehende Beschreibung verwiesen.

Mittels der Formschlusselemente 30, 31 ist eine translatorische Relativbewegung der Sensoreinrichtung 28 zum Strukturteil 3 in axialer Richtung der Durchgangsöffnung 11 verhindert bzw. blockiert. Die Formschlusselemente 30, 31 sind auf einer vom Gelenk 2 abgewandten Seite der Sensoreinrichtung 28 angeordnet. Die Formschlusselemente 30, 31 wirken hierbei im Bereich der Öffnungen 15, 16 der Durchgangsöffnung 11 mit dem Strukturteil 3 zum Festsetzen der Sensoreinrichtung 28 zusammen. Insbesondere schlägt das erste Formschlusselement 30 mit seiner ersten Stirnseite 32 an einen Rand der ersten Öffnung 15 der Durchgangsöffnung 11 und das zweite Formschlusselement 31 mit seiner zweiten Stirnseite 33 an einen Rand der zweiten Öffnung 16 der Durchgangsöffnung 11 an.

Die Dichtelemente 34, 35 sind im Bereich der Öffnungen 15, 16 der Durchgangsöffnung 11 und innerhalb der Durchgangsöffnung 11 angeordnet. Das erste Dichtelement 34 ist im Bereich der ersten Öffnung 15 der Durchgangsöffnung 11 und das zweite Dichtelement 35 im Bereich der zweiten Öffnung 16 der Durchgangsöffnung 11 angeordnet. Hierbei ist der Signalempfänger 21 zwischen den beiden Dichtelementen 30, 31 angeordnet und somit vor äußeren Umwelteinflüssen besonders gut geschützt.

### Bezugszeichen

- 1: Fahrwerkbauteil
- 2: erste Fahrwerkkomponente / Gelenk
- 3: weitere Fahrwerkkomponente / Strukturteil
- 4: Gelenkgehäuse
- 5: Gelenkinnenteil
- 6: Dichtungsbalg
- 7: Gelenkaufnahme
- 8: Drehachse
- 9: Messeinrichtung
- 10: Sensoreinrichtung
- 11: Durchgangsöffnung
- 12: Lagerschale
- 13: Signalgeber
- 14: Gelenkkugel
- 15: erste Öffnung
- 16: zweite Öffnung
- 17: erster Durchgangsabschnitt
- 18: weiterer Durchgangsabschnitt
- 19: Längsachse
- 20: Vertiefung
- 21: Signalempfänger
- 22: erster Endabschnitt
- 23: zweiter Endabschnitt
- 24: Befestigungseinrichtung
- 25: Durchgangsloch
- 26: Befestigungsaufnahme
- 27: Anschlusseinrichtung
- 28: Sensoreinrichtung
- 29: Befestigungseinrichtung
- 30: Formschlusselement
- 31: Formschlusselement
- 32: Stirnseite
- 33: Stirnseite
- 34: Dichtelement
- 35: Dichtelement
- 36: Dichtnut
- 37: Dichtnut
- 38: Fahrwerkbauteil

## Patentansprüche

1. Fahrwerkbauteil mit zwei beweglich miteinander verbundenen Fahrwerkkomponenten, wobei eine erste Fahrwerkkomponente ein Gelenk (2) mit mindestens einer Drehachse (8) und eine weitere Fahrwerkkomponente ein Strukturteil (3) ist, das Strukturteil (3) ist mittels des Gelenks (2) um die Drehachse (8) des Gelenks (2) gelenkbeweglich gelagert, und mit einer Messeinrichtung (9) zum Bestimmen einer relativen Lage der zwei beweglich miteinander verbundenen Fahrwerkkomponenten, wobei die Messeinrichtung (9) einen Signalgeber (13) und eine Sensoreinrichtung (10, 28) mit einem Signalempfänger (21) aufweist, wobei die Sensoreinrichtung (10, 28) am Strukturteil (3) und der Signalgeber (13) am Gelenk (2) angeordnet sind, wobei sich die Sensoreinrichtung (10, 28) durch eine Durchgangsöffnung (11) hindurch erstreckt, und die Sensoreinrichtung (10, 28) einen ersten Endabschnitt (22) und einen vom ersten Endabschnitt (22) abgewandten zweiten Endabschnitt (23) aufweist, wobei der erste Endabschnitt (22) und der zweite Endabschnitt (23) außerhalb der Durchgangsöffnung (11) angeordnet sind und der Signalempfänger (21) der Sensoreinrichtung (10, 28) innerhalb der Durchgangsöffnung (11) angeordnet ist, wobei sich die Durchgangsöffnung (11) quer oder rechtwinklig zur Drehachse (8) des Gelenks (2) und parallel zu einer Längsachse (19) des Strukturteils (3) erstreckt, und der zweite Endabschnitt (22) eine Anschlusseinrichtung (27) zum Verbinden mit einer Auswerteeinrichtung hat, wobei die Sensoreinrichtung (10, 28) eine Befestigungseinrichtung (24, 29) zum Festsetzen der Sensoreinrichtung (10, 28) am Strukturteil (3) aufweist, **dadurch gekennzeichnet, dass** das Gelenk (2) als ein Kugelhülsengelenk oder als ein Kugelzapfengelenk und das Strukturteil (3) als ein Lenker, ein Radträger, ein Flanschgelenk oder eine Spurstange ausgebildet ist, wobei der erste Endabschnitt (22) der Sensoreinrichtung (10) die Befestigungseinrichtung (24, 29) aufweist und der erste Endabschnitt (22) zum Ausbilden der Befestigungseinrichtung (24) ein Durchgangsloch (25) zum Durchstecken eines Befestigungsmittels aufweist.

2. Fahrwerkbauteil nach Anspruch 1, **dadurch gekennzeichnet, dass** sich die Durchgangsöffnung (11) von einer ersten Öffnung (15) im Strukturteil (3) bis zu einer zweiten Öffnung (16) im Strukturteil (3) erstreckt, insbesondere sind die erste Öffnung (15) und die zweite Öffnung (16) voneinander abgewandt.

3. Fahrwerkbauteil nach Anspruch 1 oder 2, **dadurch gekennzeichnet, dass** die Durchgangsöffnung (11) einen ersten Durchgangsabschnitt (17) im Strukturteil (3) und einen weiteren Durchgangsabschnitt (18) im Gelenk (2) aufweist, insbesondere ist der weitere Durchgangsabschnitt (18) innerhalb des ersten Durchgangsabschnitts (17) zum Ausbilden der Durchgangsöffnung (11) angeordnet, vorzugsweise ist der weitere Durchgangsabschnitt (18) in einem Gelenkgehäuse (4) des Gelenks (2) angeordnet.

4. Fahrwerkbauteil nach Anspruch 3, **dadurch gekennzeichnet, dass** der Signalempfänger (21) der Sensoreinrichtung (10, 28) innerhalb des weiteren Durchgangsabschnittes (18) des Gelenks (2) angeordnet ist.

5. Fahrwerkbauteil nach einem der vorhergehenden Ansprüche, **dadurch gekennzeichnet, dass** zwischen der Sensoreinrichtung (10, 28) und der Durchgangsöffnung (11) eine formschlüssige und/oder drehfeste Verbindung ausgebildet ist, insbesondere ist die Sensoreinrichtung (10, 28) stabartig und/oder strebenartig ausgebildet, vorzugsweise weist die Sensoreinrichtung (10, 28) einen unrunden Außenumfang und/oder die Durchgangsöffnung (11) einen unrunden Innenumfang auf.

## Claims

1. Chassis component having two chassis component parts which are connected movably to one another, wherein a first chassis component part is a joint (2) with at least one axis of rotation (8) and a further chassis component part is a structure part (3), the structure part (3) being mounted so as to be movable in an articulated manner about the axis of rotation (8) of the joint (2) by means of the joint (2), and having a measuring device (9) for determining a relative position of the two chassis component parts connected movably to one another, wherein the measuring device (9) has a signal transmitter (13) and a sensor device (10, 28) with a signal receiver (21), wherein the sensor device (10, 28) is arranged on the structure part (3) and the signal transmitter (13) is arranged on the joint (2), wherein the sensor device (10, 28) extends through a passage opening (11), and the sensor device (10, 28) has a first end portion (22) and a second end portion (23), which is remote from the first end portion (22), wherein the first end portion (22) and the second end portion (23) are arranged outside the passage opening (11) and the signal receiver (21) of the sensor device (10, 28) is arranged within the passage opening (11), wherein the passage opening (11) extends transversely or at a right angle to the axis of rotation (8) of the joint (2) and parallel to a longitudinal axis (19) of the structure part (3), and the second end portion (22) has a connection device (27) for connection to an evaluation device, wherein the sensor device (10, 28) has a fastening device (24, 29) for fixing of the sensor device (10, 28) to the structure part (3), **characterized in that** the joint (2) is in the form of a ball sleeve joint or in the form of a ball pin joint and the structure part (3) is in the form of a link, a wheel carrier, a flange joint or a track rod, wherein the first end portion (22) of the sensor device (10) has the fastening device (24, 29) and the first end portion (22), for forming the fastening device (24), has a passage hole (25) for a fastening means to be passed through.

2. Chassis component according to Claim 1, **characterized in that** the passage opening (11) extends from a first opening (15) in the structure part (3) as far as a second opening (16) in the structure part (3), it in particular being the case that the first opening (15) and the second opening (16) are directed away from one another.

3. Chassis component according to Claim 1 or 2, **characterized in that** the passage opening (11) has a first passage portion (17) in the structure part (3) and has a further passage portion (18) in the joint (2), it in particular being the case that the further passage portion (18) is arranged within the first passage portion (17) for forming the passage opening (11), it preferably being the case that the further passage portion (18) is arranged in a joint housing (4) of the joint (2).

4. Chassis component according to Claim 3, **characterized in that** the signal receiver (21) of the sensor device (10, 28) is arranged within the further passage portion (18) of the joint (2).

5. Chassis component according to one of the preceding claims, **characterized in that** a form-fitting and/or rotationally conjoint connection is formed between the sensor device (10, 28) and the passage opening (11), it in particular being the case that the sensor device (10, 28) is of rod-like form and/or strut-like form, it preferably being the case that the sensor device (10, 28) has a non-round outer periphery and/or the passage opening (11) has a non-round inner periphery.

## Revendications

1. Composant de châssis avec deux éléments de châssis reliés entre eux de manière mobile, un premier élément de châssis étant une articulation (2) avec au moins un axe de rotation (8) et un autre élément de châssis étant une partie structurelle (3), la partie structurelle (3) étant montée au moyen de l'articulation (2) de manière articulée autour de l'axe de rotation (8) de l'articulation (2), et avec un dispositif de mesure (9) pour déterminer une position relative des deux éléments de châssis reliés entre eux de manière mobile, le dispositif de mesure (9) présentant un émetteur de signaux (13) et un dispositif de détection (10, 28) avec un récepteur de signaux (21), le dispositif de détection (10, 28) étant agencé sur la partie structurelle (3) et l'émetteur de signaux (13) sur l'articulation (2), le dispositif de détection (10, 28) s'étendant à travers une ouverture de passage (11), et le dispositif de détection (10, 28) présentant une première section d'extrémité (22) et une deuxième section d'extrémité (23) détournée de la première section d'extrémité (22), la première section d'extrémité (22) et la deuxième section d'extrémité (23) étant agencées à l'extérieur de l'ouverture de passage (11) et le récepteur de signaux (21) du dispositif de détection (10, 28) étant agencé à l'intérieur de l'ouverture de passage (11), l'ouverture de passage (11) s'étendant transversalement ou perpendiculairement à l'axe de rotation (8) de l'articulation (2) et parallèlement à un axe longitudinal (19) de la partie structurelle (3), et la deuxième section d'extrémité (22) ayant un dispositif de raccordement (27) pour la liaison à un dispositif d'évaluation, le dispositif de détection (10, 28) présentant un dispositif de fixation (24, 29) pour immobiliser le dispositif de détection (10, 28) sur la partie structurelle (3), **caractérisé en ce que** l'articulation (2) est réalisée sous la forme d'une articulation à douille sphérique ou sous la forme d'une articulation à pivot et rotule, et la partie structurelle (3) est réalisée sous la forme d'une bielle, d'un support de roue, d'une articulation à bride ou d'une barre d'accouplement, la première section d'extrémité (22) du dispositif de détection (10) présentant le dispositif de fixation (24, 29) et la première section d'extrémité (22) présentant un trou de passage (25) pour le passage d'un moyen de fixation pour réaliser le dispositif de fixation (24) .

2. Composant de châssis selon la revendication 1, **caractérisé en ce que** l'ouverture de passage (11) s'étend depuis une première ouverture (15) dans la partie structurelle (3) jusqu'à une deuxième ouverture (16) dans la partie structurelle (3), notamment la première ouverture (15) et la deuxième ouverture (16) sont détournées l'une de l'autre.

3. Composant de châssis selon la revendication 1 ou 2, **caractérisé en ce que** l'ouverture de passage (11) présente une première section de passage (17) dans la partie structurelle (3) et une autre section de passage (18) dans l'articulation (2), notamment l'autre section de passage (18) est agencée à l'intérieur de la première section de passage (17) pour réaliser l'ouverture de passage (11), de préférence l'autre section de passage (18) est agencée dans un boîtier d'articulation (4) de l'articulation (2).

4. Composant de châssis selon la revendication 3, **caractérisé en ce que** le récepteur de signaux (21) du dispositif de détection (10, 28) est agencé à l'intérieur de l'autre section de passage (18) de l'articulation (2).

5. Composant de châssis selon l'une quelconque des revendications précédentes, **caractérisé en ce qu'**une liaison par complémentarité de forme et/ou solidaire en rotation est réalisée entre le dispositif de détection (10, 28) et l'ouverture de passage (11), notamment le dispositif de détection (10, 28) est réalisé en forme de tige et/ou en forme d'entretoise, de préférence le dispositif de détection (10, 28) présente une périphérie extérieure non ronde et/ou l'ouverture de passage (11) présente une périphérie intérieure non ronde.
